Europäisches Patentamt

European Patent Office

Office européen des brevets

(19)

(11)  **EP 0 972 370 B1**

(12)  **EUROPÄISCHE PATENTSCHRIFT**

(45) Veröffentlichungstag und Bekanntmachung des Hinweises auf die Patenterteilung:
**02.01.2002   Patentblatt 2002/01**

(51) Int Cl.$^7$: **H04L 5/02**, H04L 27/26, H04B 1/707

(21) Anmeldenummer: **98910742.0**

(22) Anmeldetag: **04.03.1998**

(86) Internationale Anmeldenummer:
**PCT/EP98/01399**

(87) Internationale Veröffentlichungsnummer:
**WO 98/43384 (01.10.1998 Gazette 1998/39)**

(54) **VERFAHREN UND SENDEEINRICHTUNG ZUM SENDEN VON DATENSYMBOLEN AUS TEILNEHMERSIGNALEN ÜBER EINE FUNKSCHNITTSTELLE EINES MOBIL-KOMMUNIKATIONSSYSTEMS**

METHOD AND TRANSMITTER DEVICE FOR TRANSMITTING DATA SYMBOLS FROM USER SIGNALS VIA A RADIO INTERFACE OR A MOBILE COMMUNICATION SYSTEM

PROCEDE ET DISPOSITIF EMETTEUR POUR EMETTRE DES SYMBOLES DE DONNEES PROVENANT DE SIGNAUX D'ABONNES PAR L'INTERMEDIAIRE D'UNE INTERFACE RADIO D'UN SYSTEME DE TELECOMMUNICATION MOBILE

(84) Benannte Vertragsstaaten:
**DE ES FI FR GB IT SE**

(30) Priorität: **26.03.1997   EP 97105149**

(43) Veröffentlichungstag der Anmeldung:
**19.01.2000   Patentblatt 2000/03**

(73) Patentinhaber: **SIEMENS AKTIENGESELLSCHAFT
80333 München (DE)**

(72) Erfinder:
• **JUNG, Peter
D-67697 Otterberg (DE)**
• **BERENS, Friedbert
D-67663 Kaiserslautern (DE)**
• **PLECHINGER, Jörg
D-67663 Kaiserslautern (DE)**
• **BAIER, Paul, Walter
D-67661 Kaiserslautern (DE)**

(56) Entgegenhaltungen:
**EP-A- 0 752 765          WO-A-96/17455
FR-A- 2 737 366**

• **ESSAM SOUROUR ET AL: "PERFORMANCE OF ORTHOGONAL MULTI-CARRIER CDMA IN A MULTIPATH FADING CHANNEL" PROCEEDINGS OF THE GLOBAL TELECOMMUNICATIONS CONFERENCE (GLOBECOM), SAN FRANCISCO, NOV. 28 - DEC. 2, 1994, Bd. 1 OF 3, 28. November 1994, Seiten 390-394, XP000488579 INSTITUTE OF ELECTRICAL AND ELECTRONICS ENGINEERS**
• **ROLANDO: "Radio characteristics of the CTDMA and OFDM techniques and their possible applications to future mobile services (UMTS)" CSELT- TECHNICAL REPORTS, Bd. XXIV, Nr. 1, Februar 1996, Seiten 149-164, XP000675288**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Verfahren und Sendeeinrichtung zum Senden von Datensymbolen aus Teilnehmersignalen über eine Funkschnittstelle eines Mobil-Kommunikationssystems

Die Erfindung betrifft ein Verfahren und eine Sendeeinrichtung zum Senden von Datensymbolen aus Teilnehmersignalen über eine Funkschnittstelle eines Mobil-Kommunikationssystems, beispielsweise für Basisstationen oder Mobilstationen in Mobilfunknetzen.

Verschiedene Übertragungsverfahren sind aus E.Sourour et al, "Performance of orthogonal multi-carrier CDMA in a multipath fading channel", Proceedings of the global telecommunications conference (Globecom), IEEE, San Francisco, 28.11.94, Bd. 1, S. 390-392; FR 2 737 366 A; Rolando, "Radio characteristics of the CTDMA and OFDM techniques and their possible applications to future mobile services (UMTS)", CSELT technical reports, Bd. XXIV, Nr. 1, Februar 1996, S.149-164; WO 96 17 455 A und EP 0 752 765 A bekannt.

Aus G.Fettwels, A.S.Bahai, K.Anvari, "On multi-carrier code division multiple access (MC-CDMA) modem design", Proceedings of the IEEE 44th Vehicular Technology Conference VTC'94, Stockholm, 1994, S. 1670-1674, sind CDMA-Funksysteme mit mehreren Trägern bekannt. Beim Einsatz solcher Systeme in der Mobilkommunikation besteht eine Funkschnittstelle zwischen ortsfesten Basisstationen und beweglichen Mobilstationen. Die Übertragungsstrecke von einer Basisstation zu einer Mobilstation wird als Abwärtsstrecke und die Übertragungsstrecke von einer Mobilstation zu einer. Basisstation wird als Aufwärtsstrecke bezeichnet.

Das CDMA-Funksystem mit mehreren Trägern nach dem Stand der Technik ist jedoch schwer in Mobil-Kommunikationssysteme zu implementieren, da sie keine ausreichende Anpassung der sendeseitigen Erzeugung von Sendesignalen, die Teilnehmersignalen zugeordneten Datensymbole enthalten, an die Übertragungsbedingungen der Funkschnittstelle vorsieht.

Der Erfindung liegt folglich die Aufgabe zugrunde, ein verbessertes Verfahren und eine verbesserte Sendeeinrichtung zum Senden von Daten anzugeben. Diese Aufgabe wird durch das Verfahren mit den Merkmalen des Anspruchs 1 und die Sendeeinrichtung mit den Merkmalen des Anspruchs 13 gelöst. Weiterbildungen der Erfindung sind den Unteransprüchen zu entnehmen.

Beim erfindungsgemäßen Verfahren zum Senden von Datensymbolen, die von einem oder mehreren Teilnehmersignalen herrühren, wird eine Funkschnittstelle eines Mobil-Kommunikationssystem mit einer Teilnehmerseparierung, beispielsweise nach dem CDMA-Verfahren, vorausgesetzt. Dabei bilden N Datensymbole eines Teilnehmersignals einen Block. Ein solcher Block ist beispielsweise ein Funkblock, wie er innerhalb eines Zeitschlitzes in TDMA-Systemen (time division multiple access) - übertragen wird.

In einem ersten Verfahrensschritt wird der Block in mehrere Teilblöcke mit Ns Datensymbolen geteilt. Daraufhin werden die Ns Datensymbole Subträgern zugeteilt und parallel auf diese unterschiedlichen Subträger moduliert, wobei die Modulation für jeden der Subträger mit mindestens einem individuellen Kodesymbol erfolgt. Die Subträger werden zu einem breitbandigen Träger überlagert, so daß die Ns Datensymbole gleichzeitig übertragen werden. Die Übertragung erfolgt anschließend in N/Ns aneinandergereihten Teilblöcken über die Funkschnittstelle.

Das geschilderte Sendeverfahren hat ein empfängerseitiges Äquivalent. Damit ergibt sich für die Funkschnittstelle eine Systemstruktur, die durch die Vorteile der CDMA-Teilnehmerseparierung (bei Modulation/Spreizung von Datensymbolen mit unterschiedlichen Kodesymbolen), z.B. die Frequenzdiversität und die Interferenzdiversität, sehr störresistent ist und durch das Multiträgerverfahren mit Hilfe mehrerer Subträger eine flexible Zuweisung von Frequenzressourcen erlaubt. Durch das erfindungsgemäße Verfahren kann eine Mehrteilnehmerinterferenz und eine Intersymbolinterferenz entsprechend berücksichtigt und ausgeglichen werden.

Es wird durch das erfindungsgemäße Verfahren eine aufwandsgünstige Implementierung von flexiblen CDMA-Mobil-Kommunikationssystemen erleichtert. Die Signalerzeugung für die Teilnehmerseparierung mit DS (direct sequence) CDMA und durch Multiträgerverfahren wird erfindungsgemäß vereinheitlicht. Das Übertragen der Datensymbole kann flexibel und mit vielen Freiheitsgraden die spezifischen Vorteile beider Verfahren nutzen.

Nach einer vorteilhaften Weiterbildung der Erfindung werden die Subträger zu einem breitbandigen Träger linear überlagert. Somit wird der Aufwand der Signalerzeugung und der Detektion nach der Übertragung gering gehalten.

Gemäß einer Ausgestaltung der Erfindung wird ein Datensymbol auf mehreren Subträger übertragen. Damit wird eine Frequenzdiversität für dieses Datensymbol sichergestellt, die die Übertragung störresistenter macht. Weiterhin ist es vorteilhaft, zwischen den Subträger für das Datensymbol oder Gruppen von Subträgern ungenutzte Frequenzbänder anzuordnen. Durch eine solche Verschachtelung der Frequenzbänder verschiedener Datensymbole oder Teilnehmersignale werden Übertragungsfehler gestreut und sind empfängerseitig leichter auszugleichen.

Wird bei gegebenen Frequenzvorrat eine Zuteilung von Subträgern zu einem Teilblock oder einem Datensymbol durchgeführt, die den Abstand von Mittelfrequenzen der Subträger maximiert, erreicht man eine bestmögliche Frequenzdiversität.

Die Flexibilität des erfindungsgemäßen Verfahrens wird besonders vorteilhaft ausgenutzt, wenn die Anzahl der Datensymbole eines Teilblocks entsprechend den Übertragungsbedingungen der Funkschnittstelle variabel einstellbar ist. Damit läßt sich auch die Bitrate entsprechend dem Bedarf oder den unter den Übertragungsbedingungen zulässigen Maximalwerten anpassen.

Ebenso ist es vorteilhaft die Anzahl Q der einem Datensymbol zugeteilten Subträger entsprechend den Übertragungsbedingüngen der Funkschnittstelle variabel einzustellen. Damit kann die Störfestigkeit den Übertragungsbedingungen angepaßt und gleichzeitig mit den Frequenzressourcen sparsam umgegangen werden.

Nach einer weiteren Ausgestaltung der Erfindung ist eine Periode, die zur Übertragung eines Datensymbols vorgesehen ist, entsprechend den Übertragungsbedingungen der Funkschnittstelle variabel einstellbar, indem die Anzahl der gleichzeitig übertragenen Datensymbole eines Teilblocks verändert wird. Damit können je nach Länge der Periode bzw. Anzahl gleichzeitig übertragener Datensymbole die Vorteile des Multiträger- oder des Kodemultiplex-Verfahrens genutzt werden. Dies kann bei konstanter Datenrate geschehen; entsprechend der konkreten Übertragungsbedingungen werden die Parameter der Funkschnittstelle individuell eingestellt.

Wird innerhalb einer Periode, die zur Übertragung eines Datensymbols vorgesehen ist, eine Schutzzeit ohne Informationsübertragung vorgesehen, so können empfängerseitig besonders einfache und wirtschaftliche Empfänger eingesetzt werden. Diese Möglichkeit eröffnet sich, wenn längere Perioden für ein Datensymbole eingestellt sind.

Erfindungsgemäß ist es möglich die Datensymbole ohne Einschränkungen aus der Menge der komplexen Zahlen auszuwählen, da durch die subträgerbezogene Modulation eine große Anzahl von individuellen Modulationsarten und eine große und leicht einstellbare Vielfalt von Kombinationen der Datensymbole und Kodesymbole wählbar ist.

Das erfindungsgemäße Verfahren kann zusätzlich zu einer CDMA-Teilnehmerseparierung auch eine Teilnehmerseparierung nach einem TDMA- und/oder FDMA-Verfahren vorsehen, so daß die Implementierung in bestehende Mobilfunknetze leicht möglich ist.

Mit einer Speichereinrichtung zum matrixförmigen Speichern von Werten individueller Kodes wird subträgerbezogen die Modulation vorbereitet, wobei in diese Werte eine beliebige lineare Transformation der Datensymbole zu modulierten Datensymbolen und/oder eine Impulsformung der zu übertragenen Daten durch Wichtung eingerechnet wird.

Durch die Steuermittel kann vorteilhafterweise eine symbolbezogene individuelle Verarbeitung der Datensymbole vorgenommen werden, indem mindesten zwei Datensymbolen eines Blocks eine unterschiedliche Anzahl von Subträgern zugeordnet wird oder ein Block in mindestens zwei Teilblöcke mit einer unterschiedlichen Anzahl von Datensymbolen geteilt wird. Die Datensymbole eines Blocks können von unterschiedlicher Bedeutung sein. So sind z.B. üblicherweise Störungen von Signalisierungssymbolen schwerwiegender als von Symbolen zur Sprachübertragung. Dem kann das erfindungsgemäße Verfahren hervorragend Rechnung tragen, indem die Symbole oder die Teilblökke individuell behandelt werden.

Die Störsicherheit kann mit dem Produkt von Bandbreite der Subträger und Übertragungsdauer für ein Symbol beschrieben werden, so daß eine entsprechende Zuteilung der Ressourcen (Anzahl der Subträger und Symboldauer) der Funkschnittstelle innerhalb eines Blocks ein individuelle Störsicherheit festlegt.

Vorteilhafterweise ist ein Steuermittel der Sendeeinrichtung derart ausgestaltet, daß die symbolbezogene individuelle Verarbeitung der Datensymbole entsprechend den Übertragungsbedingungen und/oder der Auslastung einer Funkzelle nach Vorgaben einer Einrichtung zum Funkressourcenmanagement umgeschaltet wird. Damit wird die anforderungsgerechte Flexibilität auch während des Betriebs gewährleistet.

Erfindungsgemäß ist es möglich, für ein oder mehrere Frequenzbänder eines Subträgers bestehende Frequenzbänder eines GSM-Mobilfunknetzes oder anderen Mobilfunknetzes, z.B. PDC, IS-54/136, PHS, DECT oder IS-95 zu nutzen bzw. diese Frequenzbänder zwischen Subträgern anzuordnen.

Die Sendeeinrichtung kann in Basis- oder Mobilstationen zum Einsatz kommen. Ein großer Vorteil des erfindungsgemäßen Sendeverfahrens ist es, daß für die entsprechenden Empfangseinrichtungen herkömmliche Detektionsverfahren zum Einsatz kommen können, so kann durch einfache Parametereinstellung in der Sendeeinrichtung den speziellen Möglichkeiten der Gegenstelle entsprochen wird.

Im folgenden wird der Erfindungsgegenstand anhand von Ausführungsbeispielen unter Bezugnahme auf zeichnerische Darstellungen näher erläutert.

Dabei zeigen

FIG 1      ein Blockschaltbild eines Mobilfunknetzes,

FIG 2      eine schematische Darstellung der Frequenzressourcen der Funkschnittstelle,

FIG 3      eine schematische Darstellung der Struktur eines Funkblocks,

FIG 4a, b      schematische Darstellungen der Zuteilung der Daten zu Subträgern, und

FIG 5      ein Blockschaltbild einer Sendeeinrichtung.

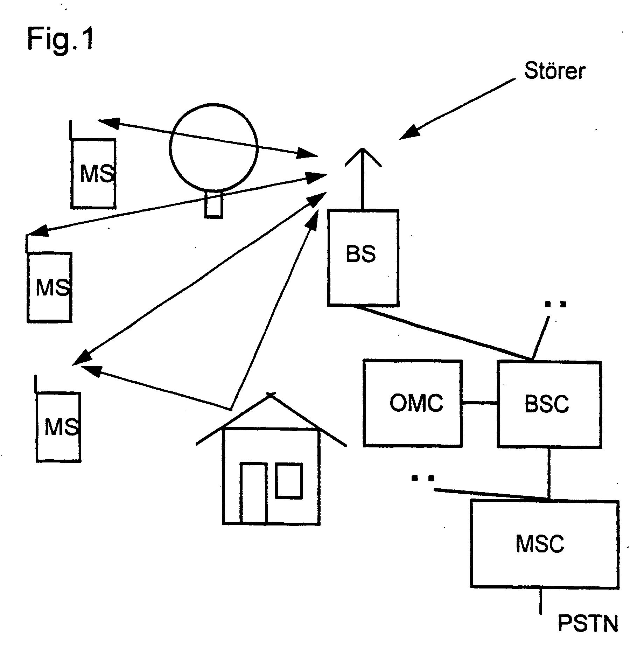

Das in FIG 1 dargestellte Mobil-Kommunikationssystem entspricht in seiner Struktur einem bekannten GSM-Mobilfunknetz, das aus einer Mehrzahl von Mobilvermittlungsstellen MSC besteht, die untereinander vernetzt sind bzw. den Zugang zu einem Festnetz PSTN herstellen. Weiterhin sind diese MobilVermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Nachrichtenverbindung zu Mobilstationen MS aufbauen kann. In FIG 1 sind beispielhaft drei Funkverbindungen zwischen drei Mobilstationen MS und einer Basisstation BS dargestellt. Ein Operations- und Wartungszentrum OMC realisiert Kontroll- und Wartungsfunktionen für das Mobilfunknetz bzw. für Teile davon. Das Operations- und Wartungszentrum OMC und der Basisstationscontroller BSC realisieren die Funktionen der Einstellung und Anpassung der Zuteilung von funktechnischen Ressourcen innerhalb der Funkzellen der Basisstationen BS. Die Funktionalität des Mobil-Kommunikationssystems ist auch auf andere Funkkommunikationssysteme übertragbar, ggf. auch mit ortsfesten Mobilstationen MS. Auch bei diesen Funkkommunikationssystemen kann das erfindungsgemäße Verfahren zum Einsatz kommen.

Die Kommunikationsverbindungen zwischen der Basisstation BS und den Mobilstationen MS unterliegen einer Mehrwegeausbreitung, die durch Reflektionen beispielsweise an Gebäuden oder Bepflanzungen zusätzlich zum direkten Ausbreitungsweg hervorgerufen werden. Geht man von einer Bewegung der Mobilstationen MS aus, dann führt die Mehrwegeausbreitung zusammen mit weiteren Störungen dazu, daß bei der empfangenden Basisstation BS sich die Signalkomponenten der verschiedenen Ausbreitungswege eines Teilnehmersignals zeithängig überlagern. Weiterhin wird davon ausgegangen, daß sich die Teilnehmersignale verschiedener Mobilstationen MS am Empfangsort zu einem Empfangssignal überlagern, da gemäß dem Ausführungsbeispiel eine Teilnehmerseparierung durch ein CDMA-Verfahren vorgenommen wird. Den sich ständig ändernden Übertragungsverhältnissen soll das im folgenden geschilderte Verfahren angepaßt sein.

Aufgabe der sendenden Basisstation BS ist es, in den Teilnehmersignalen enthaltenen Daten d für die Übertragung vorzubereiten und zu den einzelnen Mobilstationen MS in teilnehmerindividuellen Kommunikationsverbindungen zu übertragen.

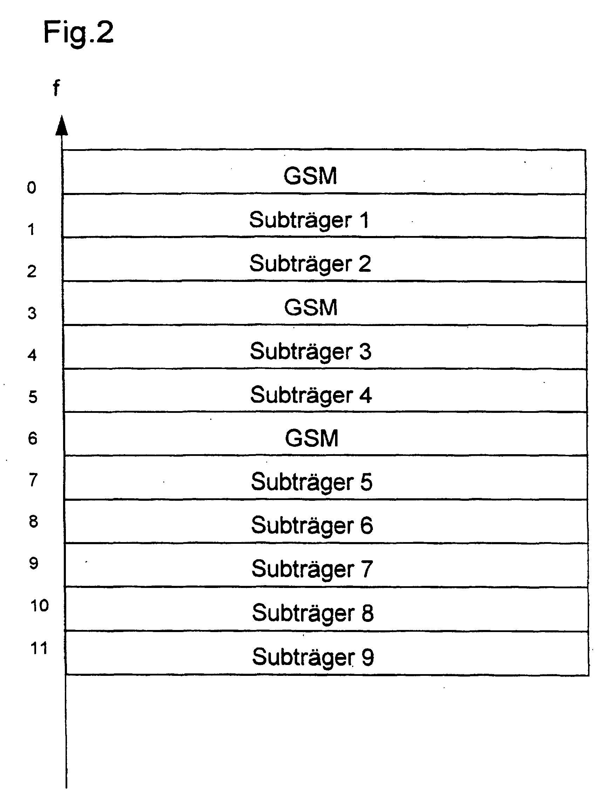

In FIG 2 ist die Frequenzuteilung innerhalb des Mobil-Kommunikatiönssystems gezeigt. Einem Netzbetreiber stehen 12 Frequenzbänder 0..11 in der Funkzelle der in Fig.1 mit drei Mobilstationen MS in Verbindung stehenden Basisstation BS zur Verfügung. Davon sind drei Frequenzbänder für ein bestehendes GSM-Mobilfunknetz bereits vergeben und werden auch weiterhin benutzt. Darüber hinaus sind neun Subträger 1,2,..9 verfügbar. Nach FIG 2 wird für alle Frequenzbänder eine konstante Bandbreite angenommen. Dies ist jedoch für ein Mobil-Kommunikationssystem im Sinne der Erfindung keine Voraussetzung.

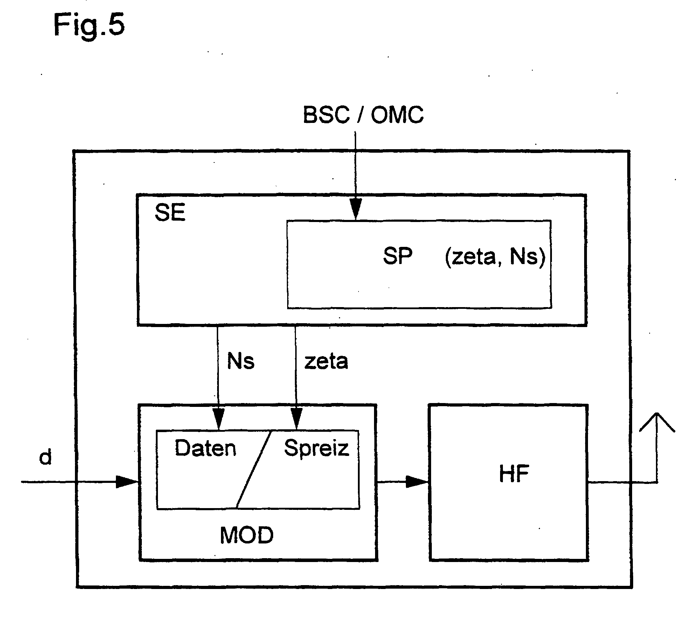

Für eine in FIG 5 näher erläuterte Sendeeinrichtung müssen lediglich mehrere solcher Frequenzbänder zu einer breitbandigen Funkschnittstelle zusammenfaßbar sein. Die Sendeeinrichtung kann dabei parallel zu einer Sendeeinrichtung für den GSM-Betrieb eingesetzt werden oder deren Funktionen durch geeignete Parametereinstellung übernehmen.

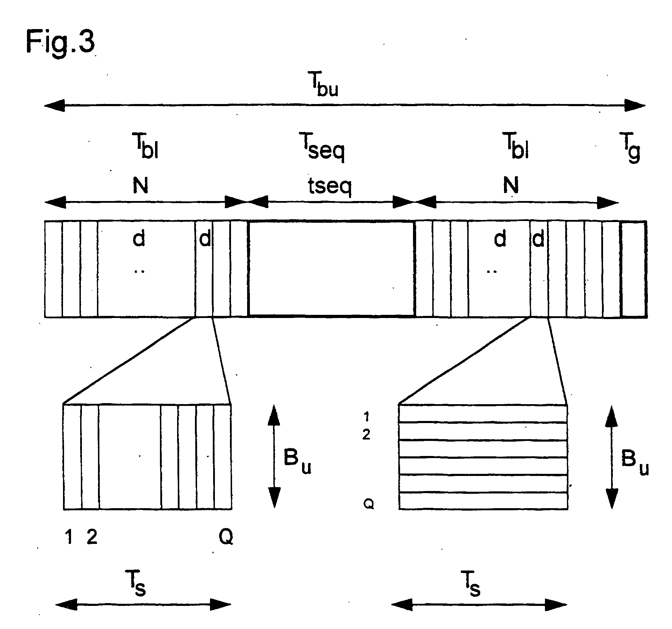

In FIG 3 wird die Struktur eines Funkblocks eines Teilnehmersignals gezeigt. Ein solcher Funkblock wird in einem Zeitschlitz einer TDMA-Rahmenstruktur übertragen. In jedem Rahmen ist zumindest ein Zeitschlitz für eine oder mehrere Teilnehmersignale vorgesehen.

Die Dauer der Funkblocks wird mit $T_{bu}$ bezeichnet. Der Funkblock umfaßt zwei Blöcke mit jeweils N Datensymbolen d, wobei jeder Block die Länge $T_{bl}$ hat. Beide Blöcke sind durch eine Trainingssequenz tseq mit der Dauer $T_{seq}$ getrennt. Den Abschluß des Funkblocks bildet eine Schutzzeit $T_g$, die die Laufzeitunterschiede aufgrund unterschiedlicher Entfernungn der Mobilstationen MS von der Basisstation BS ausgleichen soll.

Weiterhin wird in FIG 3 gezeigt, wie ein einzelnes Datensymbol d nach einem reinen CDMA-Verfahren - links- oder nach einem reinen Mehrträger-Verfahren - rechts - übertragen werden kann. Beim CDMA-Verfahren wird jedes Datensymbol d mit Q Kodesymbolen auf die Bandbreite $B_u$ gespreizt. Beim Mehrträger-Verfahren wird jedes Datensymbole d auf Q Subträger moduliert, wobei die Summe der Bandbreiten der Subträger die Bandbreite $B_u$ ergibt. In beiden Fällen dauert die Übertragung eines Datensymbols die Symboldauer $T_s$.

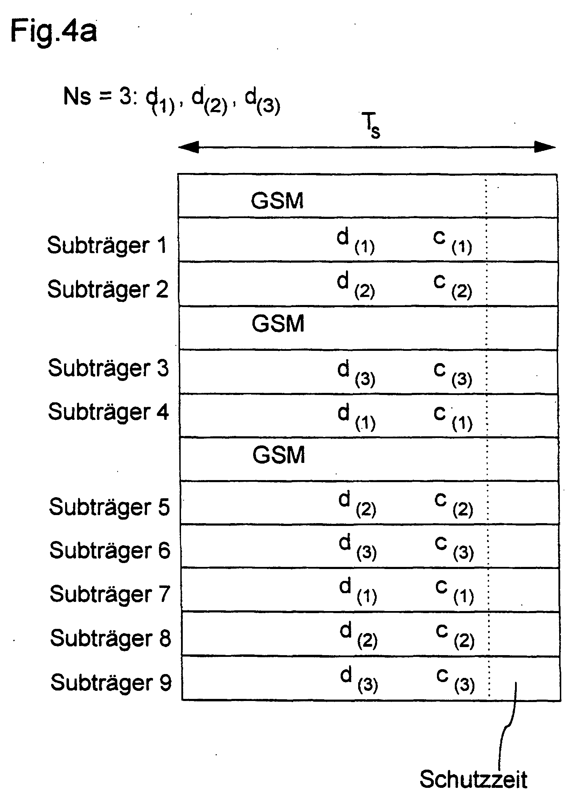

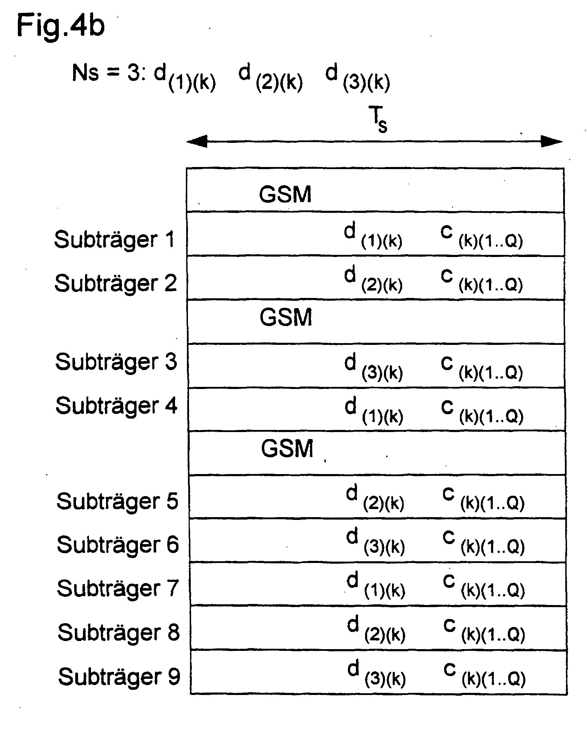

Erfindungsgemäß wird nun vom starren Schema der beiden Verfahren abgewichen und eine Übertragung nach FIG 4a, 4b vorbereitet.

In FIG 4a wird der Fall einer Übertragung eines Teilblocks mit einer Spreizung durch ein Kodesymbol c pro Datensymbol d gezeigt.

Der Block mit N Datensymbole d wird in Teilblöcke mit Ns = 3 Datensymbolen $d_{(1)}$, $d_{(2)}$ und $d_{(3)}$ geteilt. Dem Datensymbol $d_{(1)}$ werden die Subträger 1, 4 und 7, dem Datensymbol $d_{(2)}$ die Subträger 2, 5 und 8 und schließlich dem Datensymbol $d_{(3)}$ die Subträger 3, 6 und 9 zugeteilt. Entsprechendes geschieht für die übrigen Teilblöcke des Blockes. Die Zuteilungsstrategie sieht dabei vor, daß der Abstand der Mittenfrequenzen der Subträger für ein Datensymbol, z.B. $d_{(1)}$, maximal ist, um eine möglichst große Frequenzdiversität bei der Übertragung nutzen zu können.

Bei der Zuteilung nach FIG 4a werden die einzelnen Datensymbole $d_{(1)}$, $d_{(2)}$ und $d_{(3)}$ eines Teilblocks diesbezüglich gleichbehandelt. Sind die einzelnen Datensymbole von unterschiedlicher Wichtigkeit, kann ein einzelnes Datensymbol $d_{(1)}$ durch Zuteilung einer größeren Anzahl von Subträgern auch bevorzugt werden.

Jedes dieser Symbole wird während der Symboldauer $T_s$ mit einem individuellen Kodesymbol $c_{(1)}$, $c_{(2)}$, $c_{(3)}$ gespreizt. Die Anzahl der Kodesymbole pro Datensymbol d ist dabei auf Q=1 reduziert, wodurch bei geeigneter Auswahl der übrigen Parameter auch empfangende Stationen MS ohne CDMA-Empfang versorgt werden können.

Besonders in diesem Fall ist es möglich, innerhalb einer Symboldauer $T_s$ auch eine Schutzzeit vorzusehen, die den Einsatz von wirtschaftlichen Empfängern ohne Entzerrung erleicht. Damit können einfache und kostengünstige Mobilstationen MS zum Einsatz kommen.

Weiterhin macht es die Erfindung möglich, die Symboldauer $T_s$ zu verlängern, ohne die Datenrate zu verringern, indem die Anzahl der gleichzeitig übertragen Datensymbole, also die Länge Ns eines Teilblocks vergrößert wird. Eine längere Symboldauer $T_s$ ist insbesondere innerhalb von hierarchischen Zellstrukturen eines Mobil-Kommunikationsnetzes in Piko- oder Mikrozellen von Vorteil.

In FIG 4b wird der Fall einer Übertragung von Teilblöcken mehrerer Teilnehmersignale mit einer Spreizung durch Kodes c pro Datensymbol d. gezeigt.

Die Blöcke der K Teilnehmersignale mit N Datensymbole d werden in Teilblöcke mit Ns = 3 Datensymbolen $d_{(1)(k)}$, $d_{(2)(k)}$ und $d_{(3)(k)}$, mit k=1..K, geteilt. Den Datensymboleb $d_{(1)(k)}$ werden die Subträger 1, 4 und 7, dem Datensymbol $d_{(2)(k)}$ die Subträger 2, 5 und 8 und schließlich dem Datensymbol $d_{(3)(k)}$ die Subträger 3, 6 und 9 zugeteilt. Entsprechendes geschieht für die übrigen Teilblöcke des Blockes.

Jedes dieser Datensymbole $d_{(1)(k)}$, $d_{(2)(k)}$ und $d_{(3)(k)}$ wird während der Symboldauer $T_s$ mit einem teilnehmerindividuellen Kode $c_{(k)(q)}$, k=1..K, q=1..Q, gespreizt. K ist die Anzahl der Teilnehmer im gleichen Frequenzkanal und Zeitschlitz und Q die Anzahl der Kodesymbole pro Datensymbol d. Durch diesen teilnehmerindividuellen Kode $c_{(k)(q)}$ sind die Datensymbole $d_{(1)(k)}$, $d_{(2)(k)}$ und $d_{(3)(k)}$ der verschiedenen Teilnehmersignale auf der Empfangsseite wieder trennbar, beispielsweise mit einem sogenannten JD (Joint Detection) CDMA-Verfahren. Zusätzlich kann vorgesehen sein, daß einzelne Datensymbole $d_{(1)(k)}$, $d_{(2)(k)}$ und $d_{(3)(k)}$ auf unterschiedlichen Subträgern mit verschiedenen subträgerbezogenen. Kodes gespreizt werden, für die Datensymbole $d_{(1)(k)}$, $d_{(2)(k)}$ und $d_{(3)(k)}$ werden also drei verschiedene Kodes verwendet.

Eine Sendeeinrichtung zur Durchführung des Verfahrens ist in FIG 5 gezeigt. Die Sendeeinrichtung enthält Steuermittel SE mit einer Speichereinrichtung SP, Modulationsmittel MOD und eine Übertragungseinrichtung HF.

Die Datensymbole d der Teilnehmersignale treffen netzseitig in der Sendeeinrichtung ein und werden den Modulationsmitteln MOD zugeführt. In einem Teil der Modulationsmittel MOD wird eine Datenmodulation, z.B. Fehlersicherung, Verschachtelung u.ä. durchgeführt. Zusätzlich werden die Datensymbole d eines Blockes durch die Steuermittel SE in Teilblöcke mit Ns Datensymbolen d geteilt.

In der Speichereinrichtung SP sind die Länge Ns und die Position der Teilblöcke gespeichert. Zusätzlich sind Werte zeta in Matrixform gespeichert, die ausgelesen von den Modulationsmitteln MOD die Spreizung der Datensymbole d bewirken.

Diese Werte zeta haben beispielsweise die Form:

$$zeta^{(k,ns)} = c_1^{(k)} \cdot \delta^{(l,ns)} + c_2^{(k)} \cdot \delta^{(2,ns)} + .. + c_Q^{(k)} \cdot \delta^{(Q,ns)},$$

mit k=1..K, und ns=1..Ns, wobei $\delta$ die Elemente für eine inverse diskrete Fourier-Transformation (IDFT) oder eine andere lineare Transformation bezeichnen.

Zusätzlich sind in die Werte zeta Faktoren für eine Impulsformung:

$$zeta^{(k,na)} = a_x \cdot zeta,$$

mit x=1..9 (da neun Subträger nach FIG 4), derart eingerechnet, daß damit einzelne Subträger und das spätere breitbande Sendesignal eine vorgebbare Form erhalten, die ein enges Sprektrum ezeugt, z.B. eine GMSK- oder eine Formung nach einer rised-cosine-Funktion.

Durch diese Art der Spreizung zu Sendesignalen s der Form:

$$s^{(k)} = zeta^{(k)} \cdot d^{(k)},$$

mit k=1..K,
entstehen Signale, die nach Digital/Analog-Wandlung und Tiefpaßfilterung in den Übertragungsmitteln HF entsprechend verstärkt über die Funkschnittstelle zu den empfangenden Mobilstationen MS gesendet werden.

Im weiteren wird auf die Zuteilungs- und Modulationsstrategie eingegangen, die es der Sendeeinrichtung, gesteuert durch die Steuermittel SE, ermöglichen, flexible Übertragungsverfahren durch Einstellung der Parameter Ns, $T_s$, Q und Subträger pro Datensymbol d zu realisieren.

Die Auswahl der Parameter berücksichtigt die Übertragungsbedingungen (starke Störungen und Interferenzen) und die Auslastung der funktechnischen Ressourcen (Zeitschlitze, Frequenzen, Kodes) in der Funkzelle (viele Teilnehmer). Diese Bedingungen werden den Steuermitteln SE vom Basisstationscontroller BSC bzw. vom Operations- und Wartungszentrum OMC signalisiert. Daraufhin wählen die Steuermittel SE einen Parametersatz für jede Verbindung aus.

Gleichzeitig kann den Bedürfnissen einzelner Mobilstationen MS entsprochen werden, die besondere Übertragungsbedingungen (kein CDMA oder ein Mehrträger-Verfahren nur innerhalb einer bestimmten Bandbreite) und besondere Datenraten anfordern. Auch dadurch wird der zu wählende Datensatz für die Werte zeta bestimmt.

Das erfindungsgemäße Verfahren kann flexibel folgende Einstellungen vornehmen:

Viele Subträger pro Datensymbol d und/oder lange Symboldauer $T_s$ verbessern die Übertragungsqualität.

Viele Datensymbole d pro Teilblock erhöhen bei konstanter Symboldauer $T_s$ die Datenrate.

Die Übertragungsqualität kann individuell für Datensymbole d oder Teilblöcke eingestellt werden.

Die Impulsformung und Transformation kann variabel eingestellt werden.

Frequenzdiversität kann durch Zuteilung vieler Subträger für ein Datensymbol d oder durch mehrere Kodesymbole pro Datensymbol d eingestellt werden.

Damit eignet sich das erfindungsgemäße Verfahren insbesondere für einen Einsatz in zukünftigen Mobil-Kommunikationssystemen, wie UMTS (Universal Mobile Communications System) oder FPLMTS (Future Public Land Mobile Telecommunication System).

## Patentansprüche

1. Verfahren zum Senden von Datensymbolen (d) aus Teilnehmersignalen über eine Funkschnittstelle eines Mobil-Kommunikationssystems,
   wobei N Datensymbole (d) eines Teilnehmersignals einen Block bilden,
   mit den folgenden Verfahrenschritten:

   - Teilen des Blockes in mehrere Teilblöcke mit Ns Datensymbolen (d),
   - Zuteilen der Ns Datensymbole (d) zu Subträgern,
   - paralleles Modulieren der Ns Datensymbole (d) auf jeweils mindestens einen Subträger für eine gleichzeitige Übertragung, wobei die Modulation für jeden der Subträger mit mindestens einem individuellen Kodesymbol (c) erfolgt,
   - Überlagern der Subträger zu einem breitbandigen Träger, und
   - Übertragen der Teilblöcke über die Funkschnittstelle.

2. Verfahren nach Anspruch 1,
   mit einer linearen Überlagerung der Subträger zu einem breitbandigen Träger.

3. Verfahren nach Anspruch 1 oder 2, bei dem ein Datensymbol (d) auf mehreren Subträger übertragen wird.

4. Verfahren nach einem der vorhergehenden Ansprüche, bei dem zwischen den Subträger oder Gruppen von Subträgern für das Datensymbol (d) ungenutzte Frequenzbänder angeordnet sind.

5. Verfahren nach Anspruch 4,
   mit einer Zuteilung von Subträgern zu einem Teilblock, die den Abstand von Mittenfrequenzen der Subträger maximiert.

6. Verfahren nach Anspruch 4,
   mit einer Zuteilung von Subträgern zu einem Datensymbol (d), die den Abstand von Mittenfrequenzen der Subträger maximiert.

7. Verfahren nach einem der Ansprüche 4 bis 6, bei dem
   in Frequenzbändern zwischen den Subträgern oder Gruppen von Subträgern mit Datensymbolen (d) eines Teilblocks anderere Teilnehmersignale übertragen werden.

8. Verfahren nach einem der vorhergehenden Ansprüche, bei dem die Anzahl der Datensymbole (d) eines Teilblocks entsprechend der Übertragungsbedingungen der Funkschnittstelle variabel einstellbar ist.

9. Verfahren nach einem der vorhergehenden Ansprüche, bei dem die Anzahl Q der einem Datensymbol (d) zugeteilten Subträger entsprechend der Übertragungsbedingungen der Funkschnittstelle variabel einstellbar ist.

10. Verfahren nach einem der vorhergehenden Ansprüche, bei dem eine Periode, die zur Übertragung eines Datensymbols (d) vorgesehen ist, entsprechend der Übertragungsbedingungen der Funkschnittstelle variabel einstellbar ist, indem die Anzahl der gleichzeitig übertragenen Datensymbolen (d) eines Teilblocks verändert wird.

11. Verfahren nach einem der vorhergehenden Ansprüche, bei dem innerhalb einer Periode, die zur Übertragung eines Datensymbols (d) vorgesehen ist, eine Schutzzeit ohne Informationsübertragung vorgesehen ist.

12. Verfahren nach einem der vorhergehenden Ansprüche, bei dem die Datensymbole (d) aus der Menge der komplexen Zahlen gewählt werden.

13. Sendeeinrichtung zum Senden von Datensymbolen (d) aus Teilnehmersignalen über eine Funkschnittstelle eines Mobil-Kommunikationssystems,
    wobei N Datensymbole (d) eines Teilnehmersignals einen Block bilden,

    - mit Steuermitteln (SE) zum Teilen des Blockes in mehrere Teilblöcke mit Ns Datensymbolen (d),
    - mit Modulationsmitteln (MOD) zum Modulieren der Ns Datensymbole (d) auf jeweils mindestens einen Subträger für eine gleichzeitige Übertragung, wobei die Modulation für jeden der Subträger mit mindestens einem individuellen Kodesymbol (c) erfolgt, und zum Überlagern der Subträger zu einem breitbandigen Träger, und

- mit Übertragungsmitteln (HF) zum Übertragen der Teilblöcke über die Funkschnittstelle.

14. Sendeeinrichtung nach Anspruch 13, bei der eine zusätzliche Teilnehmerseparierung nach einem TDMA- und/oder FDMA-Verfahren eingesetzt wird.

15. Sendeeinrichtung nach einem der Ansprüche 13 oder 14, mit einer Speichereinrichtung (SP) zum matrixförmigen Speichern von Werten (zeta) individueller Kodes (c) bezogen auf die Subträger, wobei die Werte von den Modulationsmitteln (MOD) ausgelesen werden.

16. Sendeeinrichtung nach Anspruch 15, bei der die Werte (zeta) eine lineare Transformation der Datensymbole (d) zu modulierten Datensymbolen bewirken.

17. Sendeeinrichtung nach Anspruch 15 oder 16, bei der in die Werte (zeta) ein Faktor für eine Impulsformung der zu übertragenen Daten (d) durch subträgerbezogene Wichtung eingerechnet wird.

18. Sendeeinrichtung nach einem der Ansprüche 13 bis 17, bei der durch die Steuermittel (SE) eine symbolbezogene individuelle Verarbeitung der Datensymbole (d) vorgenommen wird, indem mindesten zwei Datensymbolen (d) eines Blocks eine unterschiedliche Anzahl von Subträgern zugeordnet wird.

19. Sendeeinrichtung nach einem der Ansprüche 13 bis 18, bei der durch die Steuermittel (SE) eine symbolbezogene individuelle Verarbeitung der Datensymbole (d) vorgenommen wird, indem ein Block in mindestens zwei Teilblöcke mit einer unterschiedlichen Anzahl Ns von Datensymbolen (d) geteilt wird.

20. Sendeeinrichtung nach einem der Ansprüche 13 bis 19, bei der durch die Steuermittel (SE) eine symbolbezogene individuelle Verarbeitung der Datensymbole (d) vorgenommen wird, indem mindestens zwei Datensymbolen (d) oder zwei Teilblöcken eines Blocks eine unterschiedliches Produkt von Bandbreite der Subträger und Übertragungsdauer für ein Symbol zugeordnet wird.

21. Sendeeinrichtung nach einem der Ansprüche 17 bis 19, bei der die Steuermittel (SE) die symbolbezogene individuelle Verarbeitung der Datensymbole (d) entsprechend der Übertragungsbedingungen und/oder der Auslastung einer Funkzelle nach Vorgaben einer Einrichtung (BSC, OMC) zum Funkressourcenmanagement umschalten.

22. Sendeeinrichtung nach einem der Ansprüche 13 bis 21, bei der als mindestens ein Frequenzband eines Subträgers bestehende Frequenzbänder eines GSM-Mobilfunknetzes oder anderen Mobilfunknetzes genutzt werden.

23. Sendeeinrichtung nach einem der Ansprüche 13 bis 22, die als Teil einer Basisstation (BS) eines Mobil-Kommunikationssystems ausgebildet ist.

24. Sendeeinrichtung nach einem der Ansprüche 13 bis 22, die als Teil einer Mobilstation (MS) eines Mobil-Kommunikationssystems ausgebildet ist.

**Claims**

1. Method for transmitting data symbols (d) from subscriber signals via a radio interface of a mobile communications system, N data symbols (d) of a subscriber signal forming a block, with the following method steps:

   - division of the block into a plurality of partial blocks with Ns data symbols (d),
   - allocation of the Ns data symbols (d) to sub-carriers,
   - parallel modulation of the Ns data symbols (d) onto in each case at least one sub-carrier for simultaneous transmission, the modulation for each of the sub-carriers being carried out using at least one individual code symbol (c),
   - heterodyning of the sub-carriers to form a broadband carrier, and
   - transmission of the partial blocks via the radio interface.

2. Method according to Claim 1, using linear heterodyning of the sub-carriers to form a broadband carrier.

3. Method according to Claim 1 or 2, in which a data symbol (d) is transmitted on a plurality of sub-carriers.

**4.** Method according to one of the preceding claims, in which unused frequency bands are arranged between the sub-carriers or groups of sub-carriers for the data symbol (d).

**5.** Method according to Claim 4, with allocation of sub-carriers to a partial block, which allocation maximizes the interval between the centre frequencies of the sub-carriers.

**6.** Method according to Claim 4, with allocation of sub-carriers to a data symbol (d), which allocation maximizes the interval between the centre frequencies of the sub-carriers.

**7.** Method according to one of Claims 4 to 6, in which other subscriber signals are transmitted in frequency bands between the sub-carriers or groups of sub-carriers with data symbols (d) of a partial block.

**8.** Method according to one of the preceding claims, in which the number of data symbols (d) in a partial block can be varied depending on the transmission conditions of the radio interface.

**9.** Method according to one of the preceding claims, in which the number Q of sub-carriers allocated to one data symbol (d) is variable depending on the transmission conditions of the radio interface.

**10.** Method according to one of the preceding claims, in which a period which is intended for transmission of a data symbol (d) is variable depending on the transmission conditions of the radio interface, by varying the number of simultaneously transmitted data symbols (d) in a partial block.

**11.** Method according to one of the preceding claims, in which a guard time without any information transmission is provided within a period which is intended for transmission of a data symbol (d).

**12.** Method according to one of the preceding claims, in which the data symbols (d) are chosen from the set of complex numbers.

**13.** Transmitting device for transmitting data symbols (d) from subscriber signals via a radio interface of a mobile communications system,
N data symbols (d) of a subscriber signal forming a block,

- having control means (SE) for dividing the block into a plurality of partial blocks with Ns data symbols (d),
- having modulation means (MOD) for modulating the Ns data symbols (d) onto in each case at least one sub-carrier for simultaneous transmission, the modulation for each of the sub-carriers being carried out with at least one individual code symbol (c), and for heterodyning of the sub-carriers to form a broadband carrier, and

- having transmission means (HF) for transmitting the partial blocks via the radio interface.

**14.** Transmitting device according to Claim 13, in which additional subscriber separation is used, in accordance with a TDMA and/or FDMA method.

**15.** Transmitting device according to one of Claims 13 or 14, having a memory device (SP) for storing values (zeta) of individual codes (c) related to the sub-carriers in the form of a matrix, the values being read by the modulation means (MOD).

**16.** Transmitting device according to Claim 15, in which the values (zeta) result in linear transformation of the data symbols (d) to form modulated data symbols.

**17.** Transmitting device according to Claim 15 or 16, in which a factor for pulse shaping of the data (d) to be transmitted is included in the values (zeta) by means of sub-carrier-related weighting.

**18.** Transmitting device according to one of Claims 13 to 17, in which symbol-related individual processing of the data symbols (d) is carried out by the control means (SE) by assigning a different number of sub-carriers to at least two data symbols (d) in a block.

**19.** Transmitting device according to one of Claims 13 to 18, in which symbol-related individual processing of the data symbols (d) is carried out by the control means (SE) by a block being divided into at least two partial blocks having a different number Ns of data symbols (d).

**20.** Transmitting device according to one of Claims 13 to 19, in which symbol-related individual processing of the data symbols (d) is carried out by the control means (SE) by allocating a different product of the bandwidth of the sub-carriers and the transmission duration for a symbol to at least two data symbols (d) or two partial blocks of a block.

**21.** Transmitting device according to one of Claims 17 to 19, in which the control means (SE) switch over the symbol-related individual processing of the data symbols (d) in accordance with the stipulations of a device (BSC, OMC) for radio resource management, depending on the transmission conditions and/or the load level of a radio cell.

**22.** Transmitting device according to one of Claims 13 to 21, in which existing frequency bands in a GSM mobile radio network or another mobile radio network are used as at least one frequency band of a sub-carrier.

23. Transmitting device according to one of Claims 13 to 22, which is designed as part of a base station (BS) of a mobile communications system.

24. Transmitting device according to one of Claims 13 to 22, which is designed as part of a mobile station (MS) of a mobile communications system.

**Revendications**

1. Procédé pour émettre des symboles de données (d) provenant de signaux d'abonnés par l'intermédiaire d'une interface radio d'un système de communication mobile,
   N symboles de données (d) d'un signal d'abonné formant un bloc,
   comprenant les étapes suivantes :

   - division du bloc en plusieurs sous-blocs ayant Ns symboles de données (d),
   - attribution des Ns symboles de données (d) à des sous-porteuses,
   - modulation parallèle des Ns symboles de données (d) sur respectivement au moins une sous-porteuse pour une transmission simultanée, la modulation pour chacune des sous-porteuses s'effectuant par au moins un symbole de code (c) individuel,
   - superposition des sous-porteuses en une porteuse à large bande, et
   - transmission des sous-blocs par l'intermédiaire de l'interface radio.

2. Procédé selon la revendication 1, comportant une superposition linéaire des sous-porteuses en une porteuse à large bande.

3. Procédé selon la revendication 1 ou 2, dans lequel on transmet un symbole de données (d) sur plusieurs sous-porteuses.

4. Procédé selon l'une des revendications précédentes, dans lequel des bandes de fréquences inutilisées sont disposées entre les sous-porteuses ou des groupes de sous-porteuses pour le symbole de données (d) .

5. Procédé selon la revendication 4, comportant une attribution de sous-porteuses à un sous-bloc, laquelle attribution maximise la distance entre fréquences moyennes des sous-porteuses.

6. Procédé selon la revendication 4, comportant une attribution de sous-porteuses à un symbole de données (d), laquelle attribution maximise la distance entre fréquences moyennes des sous.-porteuses.

7. Procédé selon l'une des revendications 4 à 6, dans lequel on transmet d'autres signaux d'abonnés dans des bandes de fréquences entre les sous-porteuses ou groupes de sous-porteuses ayant des symboles de données (d) d'un sous-bloc.

8. Procédé selon l'une des revendications précédentes, dans lequel le nombre des symboles de données (d) d'un sous-bloc est réglable de façon variable selon les conditions de transmission de l'interface radio.

9. Procédé selon l'une des revendications précédentes, dans lequel le nombre Q des sous-porteuses attribuées à un symbole de données (d) est réglable de façon variable selon les conditions de transmission de l'interface radio.

10. Procédé selon l'une des revendications précédentes, dans lequel une période qui est prévue pour la transmission d'un symbole de données (d) est réglable de façon variable selon les conditions de transmission de l'interface radio, le nombre des symboles de données (d) d'un sous-bloc qui sont transmis simultanément étant modifié.

11. Procédé selon l'une des revendications précédentes, dans lequel un temps de protection sans transmission d'information est prévu à l'intérieur d'une période qui est prévue pour la transmission d'un symbole de données (d).

12. Procédé selon l'une des revendications précédentes, dans lequel on sélectionne les symboles de données (d) dans l'ensemble des nombres complexes.

13. Dispositif émetteur pour émettre des symboles de données (d) provenant de signaux d'abonnés par l'intermédiaire d'une interface radio d'un système de communication mobile,
    N symboles de données (d) d'un signal d'abonné formant un bloc,

    - comprenant des moyens de commande (SE) pour diviser le bloc en plusieurs sous-blocs ayant Ns symboles de données (d),
    - comprenant des moyens de modulation (MOD) pour moduler les Ns symboles de données (d) sur respectivement au moins une sous-porteuse pour une transmission simultanée, la modulation pour chacune des sous-porteuses s'effectuant par au moins un symbole de code (c) individuel, et pour superposer les sous-porteuses en une porteuse à large bande, et

- comprenant des moyens de transmission (HF) pour transmettre les sous-blocs par l'intermédiaire de l'interface radio.

**14.** Dispositif émetteur selon la revendication 13, dans lequel une séparation d'abonnés supplémentaire selon un procédé TDMA et/ou FDMA est utilisée.

**15.** Dispositif émetteur selon l'une des revendications 13 ou 14, comprenant un dispositif de mémorisation (SP) pour mémoriser sous forme de matrices des valeurs (zeta) de codes individuels (c) par rapport aux sous-porteuses, les valeurs étant lues par les moyens de modulation (MOD).

**16.** Dispositif émetteur selon la revendication 15, dans lequel les valeurs (zeta) provoquent une transformation linéaire des symboles de données (d) en symboles de données modulés.

**17.** Dispositif émetteur selon la revendication 15 ou 16, dans lequel un facteur pour une mise en forme d'impulsions des données à transmettre (d) est inclus dans les valeurs (zeta) par pondération rapportée aux sous-porteuses.

**18.** Dispositif émetteur selon l'une des revendications 13 à 17, dans lequel les moyens de commande (SE) effectuent un traitement individuel, rapporté au symbole, des symboles de données (d) en associant à au moins deux symboles de données (d) d'un bloc un nombre différent de sous-porteuses.

**19.** Dispositif émetteur selon l'une des revendications 13 à 18, dans lequel les moyens de commande (SE) effectuent un traitement individuel, rapporté au symbole, des symboles de données (d) en divisant un bloc en au moins deux sous-blocs ayant un nombre différent Ns de symboles de données (d).

**20.** Dispositif selon l'une des revendications 13 à 19, dans lequel les moyens de commande (SE) effectuent un traitement individuel, rapporté au symbole, des symboles de données (d) en associant à au moins deux symboles de données (d) ou deux sous-blocs d'un bloc un produit différent égal à la largeur de bande des sous-porteuses par la durée de transmission pour un symbole.

**21.** Dispositif émetteur selon l'une des revendications 17 à 19, dans lequel les moyens de commande (SE) commutent le traitement individuel, rapporté au symbole, des symboles de données (d) en fonction des conditions de transmission et/ou de la charge d'une cellule radio d'après les prescriptions d'un dispositif (BSC, OMC) pour la gestion des ressources radio.

**22.** Dispositif émetteur selon l'une des revendications 13 à 21, dans lequel des bandes de fréquences existantes d'un réseau de radiocommunication mobile GSM ou d'un autre réseau de radiocommunication mobile sont utilisées comme au moins une bande de fréquence d'une sous-porteuse.

**23.** Dispositif émetteur selon l'une des revendications 13 à 22, lequel est conçu comme partie d'une station de base (BS) d'un système de radiocommunication mobile.

**24.** Dispositif émetteur selon l'une des revendications 13 à 22, lequel est conçu comme partie d'une station mobile (MS) d'un système de radiocommunication mobile.

# Fig.1

## Fig.2

f

| | |
|---|---|
| 0 | GSM |
| 1 | Subträger 1 |
| 2 | Subträger 2 |
| 3 | GSM |
| 4 | Subträger 3 |
| 5 | Subträger 4 |
| 6 | GSM |
| 7 | Subträger 5 |
| 8 | Subträger 6 |
| 9 | Subträger 7 |
| 10 | Subträger 8 |
| 11 | Subträger 9 |

Fig.3

# Fig.4a

$Ns = 3: d_{(1)}, d_{(2)}, d_{(3)}$

$T_s$

| | |
|---|---|
| GSM | |
| Subträger 1 | $d_{(1)}$ $\quad$ $c_{(1)}$ |
| Subträger 2 | $d_{(2)}$ $\quad$ $c_{(2)}$ |
| GSM | |
| Subträger 3 | $d_{(3)}$ $\quad$ $c_{(3)}$ |
| Subträger 4 | $d_{(1)}$ $\quad$ $c_{(1)}$ |
| GSM | |
| Subträger 5 | $d_{(2)}$ $\quad$ $c_{(2)}$ |
| Subträger 6 | $d_{(3)}$ $\quad$ $c_{(3)}$ |
| Subträger 7 | $d_{(1)}$ $\quad$ $c_{(1)}$ |
| Subträger 8 | $d_{(2)}$ $\quad$ $c_{(2)}$ |
| Subträger 9 | $d_{(3)}$ $\quad$ $c_{(3)}$ |

Schutzzeit

# Fig.4b

$Ns = 3$: $d_{(1)(k)}$  $d_{(2)(k)}$  $d_{(3)(k)}$

$T_s$

| | |
|---|---|
| GSM | |
| Subträger 1 | $d_{(1)(k)}$  $c_{(k)(1..Q)}$ |
| Subträger 2 | $d_{(2)(k)}$  $c_{(k)(1..Q)}$ |
| GSM | |
| Subträger 3 | $d_{(3)(k)}$  $c_{(k)(1..Q)}$ |
| Subträger 4 | $d_{(1)(k)}$  $c_{(k)(1..Q)}$ |
| GSM | |
| Subträger 5 | $d_{(2)(k)}$  $c_{(k)(1..Q)}$ |
| Subträger 6 | $d_{(3)(k)}$  $c_{(k)(1..Q)}$ |
| Subträger 7 | $d_{(1)(k)}$  $c_{(k)(1..Q)}$ |
| Subträger 8 | $d_{(2)(k)}$  $c_{(k)(1..Q)}$ |
| Subträger 9 | $d_{(3)(k)}$  $c_{(k)(1..Q)}$ |

## Fig.5

BSC / OMC

SE

SP    (zeta, Ns)

Ns      zeta

d

Daten    Spreiz

MOD

HF